# EUROPÄISCHE PATENTSCHRIFT

(11) **EP 3 253 634 B1**
(45) Veröffentlichungstag und Bekanntmachung des Hinweises auf die Patenterteilung: **25.08.2021**
(21) Anmeldenummer: 16703528.6
(22) Anmeldetag: 05.02.2016
(51) Int. Cl.: B60W 30/095, G06K 9/00, G08G 1/16, B60W 50/06

(54) **VERARBEITEN VON SENSORDATEN FÜR EIN FAHRERASSISTENZSYSTEM**
PROCESSING OF SENSOR DATA FOR A DRIVER ASSISTANCE SYSTEM
TRAITEMENT DE DONNÉES DE CAPTEUR POUR UN SYSTÈME D'AIDE À LA CONDUITE

(30) Priorität: 06.02.2015 DE 102015202099
(43) Veröffentlichungstag der Anmeldung: 13.12.2017
(73) Patentinhaber: Bayerische Motoren Werke Aktiengesellschaft, 80809 München (DE)
(72) Erfinder: MAYSER, Christoph, 82008 Unterhaching (DE)
(86) Internationale Anmeldenummer: PCT/EP2016/052498
(87) Internationale Veröffentlichungsnummer: WO 2016/124736

(56) Entgegenhaltungen:
- EP-A1- 2 765 047
- DE-A1-102009 050 503
- US-A1- 2011 022 317

## Beschreibung

Die vorliegende Erfindung betrifft ein Verfahren zum Verarbeiten von Sensordaten für ein Fahrerassistenzsystem sowie eine Sensorvorrichtung.

Aus der US 2011/0022317 A1 geht ein Fahrerassistenzsystem hervor, das einen Sensor zum Detektieren von Hindernissen aufweist. Diese Sensorinformationen werden an ein sogenanntes PCS-System (pre-crash safety system) weitergeleitet, welches das Risiko einer Kollision mit dem Hindernis berechnet, um eine solche Kollision zu vermeiden. Diese Informationen werden an ein kombiniertes Spurwechsel-Warnsystem und Spurhaltesystem weitergeleitet, mit welchem das Kraftfahrzeug selbsttätig eine Fahrspur halten kann bzw. ein Fahrer eines Kraftfahrzeugs beim Verlassen einer Spur gewarnt wird. In diesem kombinierten Spurwechsel-Warnsystem und Spurhaltesystem werden Bereich um die Hindernisse bestimmt, welche nicht befahren werden können.

In der DE 10 2009 050 503 A1 ist ein Verfahren zum Detektieren eines freien Fahrtpfads für ein Host-Fahrzeug offenbart. Das Verfahren umfasst die Detektion eines freien Pfads durch eine Bildanalyse und eine Detektion eines Objekts innerhalb einer Betriebsumgebung des Host-Fahrzeugs. Wird ein Objekt durch die Sensordaten erfasst, werden diese Daten analysiert und die Auswirkungen des Objekts auf dem freien Pfad ermittelt. Diese Auswirkungen des Objekts werden verwendet, um einen verbesserten freien Fahrpfad zu beschreiben. Der verbesserte freie Fahrpfad wird verwendet, um das Host-Fahrzeug zu navigieren.

Es gibt unterschiedliche Fahrerassistenzsysteme, die den Fahrer eines Kraftfahrzeuges mit einem teilautomatisierten oder vollautomatisierten Steuern des Kraftfahrzeuges unterstützen. Derartige Fahrerassistenzsysteme sind Spurwechselassistenten, Bremsassistenten, Notfall- bzw. Ausweichassistenten oder Fahrerassistenzsysteme für ein automatisiertes Fahren eines Kraftfahrzeuges. Damit die Fahrerassistenzsysteme ein Fahrzeug steuern können, sind automatische Verfahren entwickelt worden, mit welchen Objekte erfasst und in einer Belegungskarte (engl.: occupancy grid) eingetragen werden können. Die einzelnen Objekte werden oftmals mit unterschiedlichen Sensoren, wie z. B. einem Radar, einem Lidar, einer Kamera oder einem Infrarotsensor erfasst.

Die Daten der unterschiedlichen Sensoren werden in einer zentralen Steuereinrichtung zu der Belegungskarte zusammengefasst.

Die Erstellung der Belegungskarte muss in Echtzeit erfolgen, damit das Fahrerassistenzsystem kollisionsfreie Trajektorien erstellen kann.

Da von den unterschiedlichen Sensorvorrichtungen jeweils mehrere Objekte gleichzeitig erfasst werden, entstehen große Datenmengen, die von den Sensorvorrichtungen an die zentrale Steuereinrichtung übermittelt werden müssen. Ein erheblicher Anteil der Rechenleistung der zentralen Steuereinrichtung wird für die Kommunikation mit den einzelnen Sensorvorrichtungen beansprucht.

Die Fahrerassistenzsysteme für Kraftfahrzeuge können in zwei Gruppen unterteilt werden, den Sicherheits-Fahrerassistenzsystemen und den Komfort-Fahrerassistenzsystemen,

Die Sicherheits-Fahrerassistenzsysteme unterstützen den Fahrer bei einer Gefahrensituation. Derartige Sicherheits-Fahrerassistenzsysteme sind z.B. das Antiblockiersystem (ABS) und automatische Fahrstabilitätssysteme. Es gibt auch Sicherheits-Fahrerassistenzsysteme, welche Daten von automatisch erfassten Objekten berücksichtigen, wie z.B. Notfall-Bremsassistenten, die mittels eines Radars Objekte erfassen und in einer Gefahrensituation eine Notbremsung auslösen. Der Vorteil von solchen Sicherheits-Fahrerassistenzsystemen liegt darin, dass sie wesentlich schneller als ein Mensch reagieren können und zudem ohne Unterbrechung die Fahrsituation erfassen. Menschen lassen sich manchmal ablenken, was oftmals Auslöser von Gefahrensituationen ist. Das Ziel von Sicherheits-Fahrerassistenzsystemen ist es einen Unfall zu verhindern oder zumindest die Unfallfolgen zu minimieren.

Komfort-Fahrerassistenzsysteme sollen hingegen den Fahrer beim Fahren unterstützen und das Führen eines Fahrzeuges vereinfachen. Ein typisches Beispiel für ein Komfort-Fahrerassistenzsystem ist ein automatisches Abstandshaltesystem. Ähnlich wie beim Notfall-Bremsassistenten wird ein vor dem jeweiligen Fahrzeug befindliches Objekt mit einem Radar erfasst und der Abstand zu diesem Objekt bestimmt. In Abhängigkeit des erfassten Abstandes und der aktuellen Fahrgeschwindigkeit werden die Bremsen und der Antrieb derart angesteuert, dass ein vorbestimmter Abstand eingehalten wird. Mit diesem System kann man einem anderen Fahrzeug folgen, ohne dass man Gas geben oder bremsen muss. Das Führen eines Fahrzeuges wird somit vereinfacht.

Der Erfindung liegt die Aufgabe zugrunde ein Verfahren zum Verarbeiten von Sensordaten für ein Fahrerassistenzsystem für ein Kraftfahrzeug sowie eine Sensorvorrichtung zu schaffen, mit welchen die Übertragung der Sensordaten zwischen Sensorvorrichtungen und einer zentralen Steuereinrichtung effizient erfolgt und in der zentralen Steuereinheit wenig Rechenleistung beansprucht wird.

Die Aufgabe wird durch die in den unabhängigen Patentansprüchen angegebenen Merkmale der Erfindung gelöst. Vorteilhafte Ausgestaltungen der Erfindung sind in den jeweiligen Unteransprüchen angegeben.

Bei einem erfindungsgemäßen Verfahren zum Verarbeiten durch eine Sensorvorrichtung von Sensordaten für ein Komfort-Fahrerassistenzsystem für ein Kraftfahrzeug werden Sensordaten erfasst, die den jeweiligen Ort von Objekten beschreiben. Aus den Sensordaten werden die Koordinaten der Objekte extrahiert, wobei eine Innenseite des Objektes definiert wird, an der das Kraftfahrzeug am Objekt vorbeifahren soll. Die aktuelle Geschwindigkeit des Kraftfahrzeuges wird erfasst. Ein in Fahrtrichtung des Kraftfahrzeugs vor und/oder hinter einem jedem der Objekte liegender befahrbarer Bereich wird von einem nicht befahrbaren Bereich unterschieden. Der befahrbare Bereich wird im Folgenden als Objektfahrbereich bezeichnet. Die Grenze zwischen dem Objektfahrbereich und dem nicht befahrbaren Bereich ist eine Grenzlinie, die sich entlang der Innenseite des Objektes in Fahrtrichtung über das Objekt nach vorne und/oder nach hinten hinaus erstreckt. Daten dieser Grenzlinie werden an Stelle der das Objekt beschreibenden Sensordaten von der Sensorvorrichtung an eine Steuereinrichtung des Komfort-Fahrerassistenzsystem weiter geleitet.

Der Objektfahrbereich ist somit durch die Grenzlinie definiert. Durch das Übermitteln einer Grenzlinie für den Objektfahrbereich an Stelle einer exakten Beschreibung der erfassten Objekte kann das zu übertragende Datenvolumen zwischen der Sensorvorrichtung und der Steuereinrichtung wesentlich verringert werden. Bei einem Komfort-Fahrerassistenzsystem, das Informationen von automatisch erfassten Objekten verarbeitet muss die Erfassung und Verarbeitung in Echtzeit erfolgen und eine sichere Übertragung aller notwendigen Daten von den Sensorvorrichtungen an die Steuereinrichtung gewährleistet sein. Mit dem Objektfahrbereich wird der nicht befahrbare Bereich ausgeschlossen, so dass Objekte, die in diesem nicht befahrbaren Bereich liegen, nicht mehr erscheinen und keine weiteren Daten erzeugen. Die Beschreibung des Objektfahrbereiches mittels der Grenzlinie verursacht wesentlich weniger Daten als die Beschreibung einzelner Objekte mittels Koordinaten, weshalb die Daten der Grenzlinien effizienter und mit weniger Rechenaufwand zwischen Sensorvorrichtung und einer zentralen Steuereinrichtung übertragen werden können.

Der Erfindung liegt die Erkenntnis zu Grunde, dass Komfort-Fahrerassistenzsysteme, die zum automatischen Steuern des Fahrzeuges, insbesondere zum automatischen Lenken des Fahrzeuges, Informationen von automatisch erfassten Objekten im Umfeld des Fahrzeuges verarbeiten, keine exakte Beschreibung der erfassten Objekte benötigen, sondern lediglich eine zuverlässige Beschreibung des befahrbaren Bereichs benötigen. Es ist z.B. nicht notwendig einzelne Straßenrandpfosten einzeln zu beschreiben, sondern es genügt an Stelle der einzelnen geometrischen Beschreibung der Straßenrandpfosten eine Grenzlinie zu bestimmen, die sich entlang der Innenseite mehrerer Straßenrandpfosten erstreckt. Grundsätzlich besteht die Möglichkeit eine Straße zwischen zwei Straßenrandpfosten zu verlassen, was im Notfall auch Sinn machen kann, um bspw. in einer Gefahrensituation auf eine zur Straße benachbarte Wiese auszuweichen. Dies ist aber für eine komfortorientierte Steuerung nicht sinnvoll, denn normalerweise möchte man im normalen Fahrbetrieb mit einem Fahrzeug nicht die Straße verlassen. Mit anderen Worten heißt dies, dass ein Komfort-Fahrerassistenzsystem keine exakte Beschreibung des gesamten theoretisch befahrbaren Bereich, sondern lediglich eine zuverlässige Beschreibung des sinnvollerweise zu befahrenden Bereichs benötigt. Dieser befahrbare Bereich kann kleiner als der gesamte theoretisch befahrbare Bereich sein. Er darf selbstverständlich keine Hindernisse enthalten. Hierin unterscheidet sich ein Komfort-Fahrerassistenzsystem von einem Sicherheits-Fahrerassistenzsystem, das Informationen über den gesamten theoretisch befahrbaren Bereich benötigt. Erkennt ein Sicherheits-Fahrerassistenzsystem ein Hindernis auf der regulären Fahrbahn, dann benötigt es auch Informationen, ob ein Ausweichen auf eine an die Fahrbahn angrenzende Wiese möglich ist, um einen Ausweichvorgang einleiten zu können.

Die Bestimmung der Grenzlinie kann somit auf unterschiedliche Art und Weise erfolgen, so lange sicher gestellt ist, dass der Objektfahrbereich einen Großteil des im Normalbetrieb befahrbaren Bereichs umfasst.

Die Grenzlinie kann bspw. durch Verbinden der Innenseiten von benachbarten Objekten bestimmt werden. Die Grenzlinie kann hierbei die Objekte geradlinig verbinden. Die Grenzlinie kann auch gekrümmt sein. Sie kann bspw. in den Bereichen zwischen den Objekten durch eine Spline-Funktion dargestellt werden, die die an den Innenseiten liegenden Ränder der benachbarten Objekte miteinander verbindet. Das Verbinden der Innenseiten mehrerer Objekte zu einer Grenzlinie wird vorzugsweise in der Sensorvorrichtung ausgeführt.

Die Grenzlinie kann auch eine Trajektorie sein, die eine Bahn des Kraftfahrzeuges beschreibt, die in Fahrtrichtung vor dem Objekt von außen kommend mit einem maximalen Lenkwinkel mit minimalen Abstand innen am Objekt vorbei führt und/oder eine Bahn beschreibt, die nach dem Objekt mit einem für die aktuelle Fahrgeschwindigkeit maximalen Lenkwinkel vom Objekt nach außen führt, wobei der maximale Lenkwinkel in Abhängigkeit der Geschwindigkeit des Kraftfahrzeuges bestimmt wird.

Vorzugsweise wird die Grenzlinie nur bestimmt, wenn das Fahrzeug sich mit einer vorbestimmten Mindestgeschwindigkeit bewegt. Diese Mindestgeschwindigkeit beträgt z.B. 10 km/h und insbesondere 30km/h. Bei hohen Geschwindigkeiten werden in kurzen Zeitabständen neue Objekte detektiert, da sich das Kraftfahrzeug bewegt, so dass das Aufkommen der Daten, die die erfassten Objekte beschreiben, bei hohen Geschwindigkeiten höher als bei geringen Geschwindigkeiten ist. Sollen automatisch Trajektorien berechnet werden, um das Kraftfahrzeug autonom zu lenken, dann werden diese üblicherweise abschnittsweise für einen bestimmten Abschnitt vor dem Kraftfahrzeug berechnet. Sie müssen bei einer hohen Geschwindigkeit in kürzeren Abständen neu berechnet werden, da sie schneller abgefahren werden. Dies hat zur Folge, dass je höher die Geschwindigkeit ist, es umso schwieriger ist, in Echtzeit die Objekte zu erfassen und die entsprechenden Daten an die zentrale Steuereinrichtung zu übermitteln und sie dort zu verarbeiten.

Als die Innenseite der Objekte wird vorzugsweise die Seite der Objekte bestimmt, an der eine Trajektorie, die die Bewegung des Kraftfahrzeuges in Fahrtrichtung beschreibt, entlang führt. Hierzu wird ausgehend vom aktuellen Ort des Kraftfahrzeuges die Trajektorie in Fahrtrichtung des Kraftfahrzeuges festgelegt. Die Trajektorie kann geradlinig sein oder gemäß einem durch einen mittels eines Navigationssystems definierten Streckenverlauf ausgebildet sein.

Vorzugsweise wird eine automatische Objekterkennung ausgeführt, wobei ein jedes der erfassten Objekte zumindest jeweils einer Klasse einer vorbestimmten Menge von Klassen von Objekten, wie z.B. Fahrbahnbegrenzungspfosten, Straßenschild und anderes Fahrzeug, zugeordnet wird. Die Fahrbahnbegrenzungspfosten weisen in Deutschland meistens einen weißen Reflektor und im Kreuzungsbereich einen orangen Reflektor auf. Vorzugsweise gibt es eine Klasse für nicht im Kreuzungsbereich (weiße Reflektoren) und im Kreuzungsbereich (orange Reflektoren) angeordnete Begrenzungspfosten. Wird die Grenzlinie durch Verbinden benachbarter Objekte bestimmt, dann stellt ein Begrenzungspfosten für einen Kreuzungsbereich einen Endbereich einer solchen Begrenzungslinie dar, da zwischen zwei Begrenzungspfosten für einen Kreuzungsbereich eine weitere Straße mündet, auf welche abgebogen werden kann.

Die Objekterkennung wird vorzugsweise mittels einer Bildanalyse ausgeführt.

Bewegte Objekte können mittels einer Geschwindigkeitsmessung zur Messung der Relativgeschwindigkeit zwischen dem Kraftfahrzeug und dem Objekt detektiert werden.

Mittels einer solchen Geschwindigkeitsmessung kann auch zwischen bewegten und unbewegten Objekten unterschieden werden.

Bewegte Objekte, wie z.B. andere Kraftfahrzeuge und Fahrradfahrer und Fußgänger, werden vorzugsweise bei der Bestimmung des befahrbaren Bereichs nicht als den befahrbaren Bereich beschränkende Hindernisse berücksichtigt. Vor allem andere Kraftfahrzeuge befahren in der Regel einen befahrbaren Bereich, so dass diese dem System anzeigen, wo sich der befahrbare Bereich befindet. Daher kann es auch zweckmäßig sein, bewegte Objekte bei der Bestimmung der Innenseite von statischen Objekten zu berücksichtigen.

Es kann ein Fahrzeugfahrbereich bestimmt werden, dessen Grenzen durch zwei Trajektorien definiert sind, die jeweils eine theoretische Bahn des Kraftfahrzeuges beschreiben, die in Fahrtrichtung vom aktuellen Ort des Kraftfahrzeuges mit einem maximalen Lenkwinkel nach rechts bzw. links verlaufen. Der Fahrzeugfahrbereich befindet sich zwischen diesen beiden Trajektorien, wobei Objekte und ein Objektfahrbereich außerhalb dieses Fahrzeugfahrbereichs ignoriert werden können.

Der Fahrzeugfahrbereich wird vorzugsweise in der zentralen Steuereinrichtung berechnet und mit den Objektfahrbereichen zu einem Bewegungsbereich kombiniert.

Der berechnete Fahrzeugfahrbereich kann auch von der zentralen Steuereinrichtung an die Sensorvorrichtung übermittelt oder an der Sensorvorrichtung selbst berechnet werden. Die Sensorvorrichtung kann dann mit Hilfe des ermittelten Fahrzeugfahrbereichs bestimmen, ob bestimmte Objekte außerhalb des Fahrzeugfahrbereichs liegen. Diese Objekte können dann bei der weiteren Verarbeitung ignoriert werden und es werden nur die Beschreibungen der innerhalb des Fahrzeugfahrbereichs liegenden Objekte an die zentrale Steuereinrichtung übermittelt.

Als Geschwindigkeit des Kraftfahrzeuges zur Bestimmung des maximalen Lenkwinkels kann die aktuell gemessene Fahrgeschwindigkeit verwendet werden. Alternativ kann die aktuell gemessene Fahrgeschwindigkeit abzüglich einer maximalen Verzögerung verwendet werden.

Bei der Bestimmung der Trajektorien wird vorzugsweise die Breite des Kraftfahrzeuges berücksichtigt. Dies kann einerseits dadurch erfolgen, dass die Trajektorien für den Fahrzeugfahrbereich am seitlichen Rand des Kraftfahrzeuges beginnen und die Trajektorien des Objektfahrbereiches die Bewegung des entsprechenden seitlichen Randbereiches des Kraftfahrzeuges beschreiben. Andererseits können die Trajektorien die Bewegung eines Zentrumpunktes eines Kraftfahrzeuges beschreiben. Ein Zentrumpunkt ist beispielsweise der Schwerpunkt des Kraftfahrzeuges oder der Mittelpunkt einer Grundfläche des Kraftfahrzeuges. Die Trajektorien, die die Objektfahrbereiche beschreiben, sind dann entsprechend um eine halbe Breite vom Rand der korrespondierenden Objekte in Richtung zum Fahrzeug zu versetzen.

Eine erfindungsgemäße Sensorvorrichtung umfasst ein Sensorelement und eine Prozessorsteuerung zum Verarbeiten von Sensordaten für ein Komfort-Fahrerassistenzsystem für ein Kraftfahrzeug. Das Sensorelement ist zum Erfassen von Sensordaten ausgebildet, die einen jeweiligen Ort von Objekten beschreiben. Die Prozessorsteuerung ist zum Extrahieren von Koordinaten der Objekte aus den Sensordaten ausgebildet, wobei eine Innenseite des Objektes bestimmt wird, an der das Kraftfahrzeug am Objekt vorbeifahren soll. Die Prozessorsteuerung ist derart ausgebildet, dass ein in Fahrtrichtung des Kraftfahrzeugs vor und/oder hinter einem jedem der Objekte liegender befahrbarer Bereich von einem nicht befahrbaren Bereich unterschieden wird. Der befahrbare Bereich wird im Folgenden als Objektfahrbereich bezeichnet. Die Grenze zwischen dem Objektfahrbereich und dem nicht befahrbaren Bereich wird durch eine Grenzlinie definiert, die sich entlang der Innenseite des Objekts in Fahrtrichtung über das Objekt nach vorne und/oder nach hinten hinaus erstreckt. Daten dieser Grenzlinie werden an Stelle der das Objekt beschreibenden Sensordaten zur Weiterleitung an das Komfort-Fahrerassistenzsystem bereitgestellt.

Mit einer solchen Sensorvorrichtung werden die von den Sensorelementen erfassten Sensordaten bereits soweit verarbeitet, dass ihre Datenmenge gegenüber einer herkömmlichen Beschreibung von Objekten erheblich reduziert ist, so dass eine schnelle und einfache Übertragung an eine zentrale Steuereinrichtung des Komfort-Fahrerassistenzsystems möglich ist.

Die Sensorelemente können beispielsweise als Radar, Lidar, Kamera und/oder Ultraschallsensor ausgebildet sein.

Ein Radar besitzt eine große Reichweite und stellt zusätzlich zu Ortsinformationen auch Geschwindigkeitsinformationen der einzelnen Objekte bereit. Die Winkelauflösung eines Radars ist jedoch eher gering. Ein Lidar, das auch als Laserscanner bezeichnet wird, besitzt eine sehr hohe Auflösung. Jedoch werden die Sensorsignale bei schlechter Sicht durch Nebel oder Gischt auf der Fahrbahn beeinträchtigt. Eine Kamera weist eine hohe Winkelauflösung auf, jedoch kann die exakte Entfernung nur mit erheblichem Rechenaufwand abgeschätzt werden. Bei Gegenlicht wird die Funktionsweise einer Kamera erheblich beeinträchtigt. Ein Ultraschallsensor dient der Nahfelderfassung von Objekten. Die einzelnen Sensortypen besitzen jeweils Stärken und Schwächen, sodass die Objekte in der Umgebung des Kraftfahrzeugs bevorzugt mit unterschiedlichen Sensortypen erfasst werden.

Der Begriff Sensorelement kann auch jegliche Datenquelle umfassen, die Daten zur Beschreibung von Objekten bereitstellt. Eine solche Datenquelle kann auch eine digitale Landkarte sein, in welcher die Objekte eingetragen sind.

Die Sensordaten der Sensorvorrichtung sollen möglichst präzise erfasst und weitergegeben werden. Bei der Verarbeitung der Sensordaten in der Sensorvorrichtung ist es deshalb nicht beabsichtigt einen Sicherheitsbereich bzw. eine Sicherheitstoleranz hinzuzuschlagen. Dies kann dann im Fahrerassistenzsystem ausgeführt werden.

Ein erfindungsgemäßes System zum Verarbeiten von Sensordaten für ein Fahrerassistenzsystem für ein Kraftfahrzeug umfasst zumindest eine erfindungsgemäße Sensorvorrichtung und eine zentrale Steuereinrichtung, die mit der Sensorvorrichtung verbunden ist.

Die zentrale Steuereinrichtung kann zur Erstellung einer Belegungskarte ausgebildet sein. Die Belegungskarte kann zum automatischen Bestimmen einer Trajektorie zum autonomen Lenken des Kraftfahrzeugs verwendet werden.

Die Erfindung wird nachfolgend beispielhaft anhand der Zeichnungen erläutert. Die Zeichnungen zeigen in:
Figur 1 ein Kraftfahrzeug und ein Objekt und einen Objektfahrbereich,
Figur 2 ein Kraftfahrzeug und einen Fahrzeugfahrbereich,
Figur 3 eine Fahrstrecke mit einem Kraftfahrzeug sowie den Objektfahrbereich und den Fahrzeugfahrbereich schematisch in einer Draufsicht,
Figur 4 eine Fahrstrecke mit einem Kraftfahrzeug sowie den Objektfahrbereich und den Fahrzeugfahrbereich schematisch in einer Draufsicht, und
Figur 5 schematisch Sensorvorrichtungen und eine Steuereinrichtung in einem Blockschaltbild.

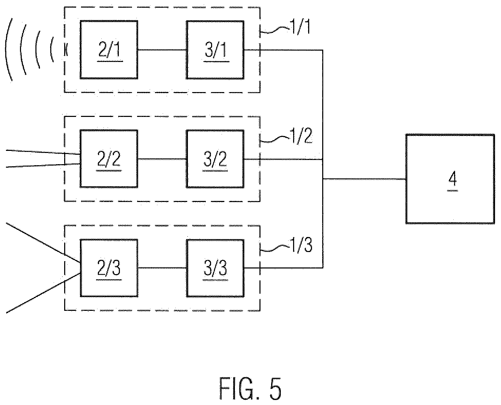

Eine erfindungsgemäße Sensorvorrichtung 1/1, 1/2 und 1/3 weist jeweils ein Sensorelement 2/1, 2/2 und 2/3 auf (Fig. 5). Die Sensorvorrichtungen 1/1 - 1/3 sind jeweils mit einer Prozessorsteuerung 3/1 - 3/3 versehen.

Im vorliegenden Ausführungsbeispiel sind drei Sensorvorrichtungen (n = 1; 2; 3) vorgesehen, die in einem Kraftfahrzeug angeordnet sind. Die erste Sensorvorrichtung 1/1 weist als Sensorelement 2/1 ein Radar, die zweite Sensorvorrichtung 1/2 ein Lidar 2/2, das auch als Laserscanner bezeichnet wird, und die dritte Sensorvorrichtung 1/3 eine Kamera 2/3 auf. Die Sensorelemente 2/n sind jeweils mit einer der Prozessorsteuerungen 3/n verbunden. Die Prozessorsteuerungen 3/n führen eine Vorverarbeitung der von den Sensorelementen 2/n abgegebenen Sensorsignale durch.

Die Prozessorsteuerungen 3/n sind mit einer zentralen Steuereinrichtung 4 verbunden, an welche sie die vorverarbeiteten Sensorsignale weiterleiten. An der zentralen Steuereinrichtung werden die Sensorsignale der unterschiedlichen Sensorvorrichtungen 1/n zu einer Belegungskarte zusammengefasst.

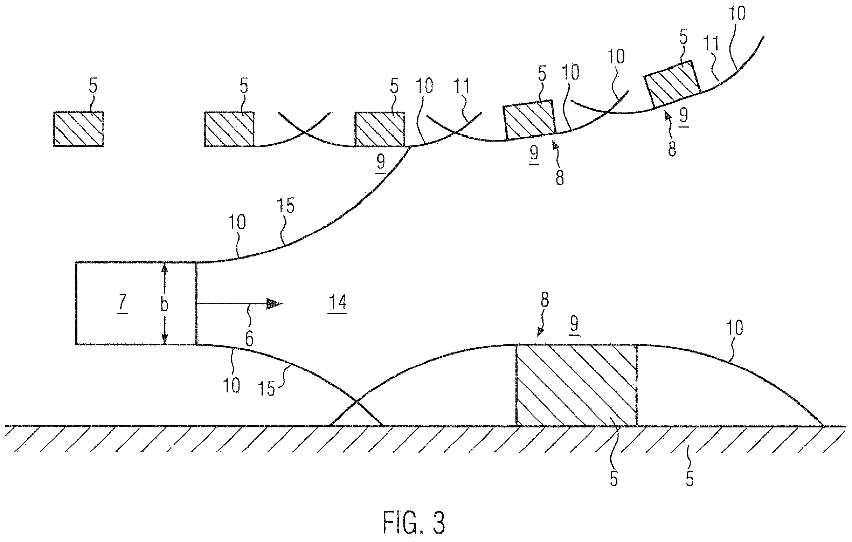

Mit den Sensorelementen 2/n werden die Koordinaten von Objekten 5 entlang eines Fahrweges in Fahrtrichtung 6 vor einem Fahrzeug 7 erfasst. (Fig. 3-4)

Das Fahrzeug 7 bewegt sich mit einer vorbestimmten Geschwindigkeit, die von einem entsprechenden Sensor (nicht dargestellt) gemessen und über die zentrale Steuereinrichtung 4 den Prozessorsteuerungen 3/n übermittelt wird.

Der vorliegenden Erfindung liegt die Erkenntnis zugrunde, dass statische Objekte 5 üblicherweise neben dem befahrbaren Bereich einer Straße angeordnet sind und ein Straßenrand üblicherweise durch eine geradlinige Kurve oder eine Kurve mit geringer Krümmung darstellbar ist, sodass die Darstellung einer Vielzahl von statischen Objekten durch eine Grenzlinie zwischen dem befahrbaren Bereich und den statischen Objekten ersetzt werden kann. Diese Grenzlinie kann bereits in einer der Sensorvorrichtungen 1/n erzeugt und an die zentrale Steuereinrichtung 4 anstelle einer detaillierten Beschreibung der einzelnen Objekte 5 weitergeleitet werden.

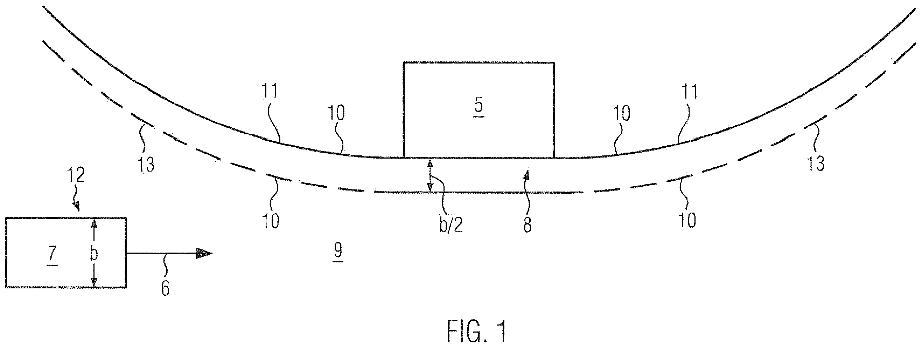

Will man das Objekt 5 an einer bestimmten Seite passieren, die im Folgenden als Innenseite bzw. Fahrbereichsseite 8 bezeichnet wird, dann wird ein befahrbarer Bereich, der im Folgenden als Objektfahrbereich bezeichnet wird, und ein nicht befahrbarer Bereich unterschieden, wobei die Grenzlinie 10 zwischen dem Objektfahrbereich 9 und dem nicht befahrbaren Bereich bspw. eine Trajektorie 11 ist, die eine theoretische Bahn des Kraftfahrzeuges 7 beschreibt, die in Fahrtrichtung vor dem Objekt 5 von außen kommend mit einem maximalen Lenkwinkel mit minimalem Abstand innen am Objekt 5 vorbeiführt und/oder eine theoretische Bahn beschreibt, die in Fahrtrichtung nach dem Objekt mit einem für die aktuelle Fahrgeschwindigkeit maximalen Lenkwinkel vom Objekt 5 nach außen führt (Fig. 1). Der maximale Lenkwinkel wird in Abhängigkeit der erfassten Geschwindigkeit des Kraftfahrzeuges 7 bestimmt.

Fig. 1 zeigt ein solches Objekt 5 mit der Trajektorie 11, deren maximaler Lenkwinkel entsprechend der aktuellen Fahrgeschwindigkeit des Kraftfahrzeuges 7 bestimmt ist. Hierbei wird für die gesamte Trajektorie 11 die gleiche Fahrgeschwindigkeit angenommen, so dass der Lenkwinkel konstant ist und die Trajektorie 11 im Bereich in Fahrtrichtung 6 vor dem Objekt 5 und im Bereich in Fahrtrichtung 6 nach dem Objekt 5 jeweils eine konstante Krümmung bzw. den gleichen Radius aufweist. Diese beiden Abschnitte der Trajektorie 11 sind somit Kreissegmente. Lediglich entlang dem Objekt 5 ist die Form der Trajektorie an die Form des Objektes 5 angepasst, die in diesem Falle geradlinig ist. Das Objekt 5 kann selbst eine gekrümmte Form aufweisen. Ist die Krümmung des Objektes geringer als die durch den maximalen Lenkwinkel erzeugte Krümmung der Trajektorie 11, dann schmiegt sich die Trajektorie 11 an die Form des Objektes an, ansonsten führt die Trajektorie 11 mit geringem Abstand entlang dem Rand an der Innenseite des Objektes 5 an dem maximal nach innen in den befahrbaren Bereich vorstehenden Punkt des Objektes 5.

Bei einer alternativen Ausführungsform kann zur Bestimmung des maximalen Lenkwinkels auch die aktuelle Fahrgeschwindigkeit herangezogen werden, wobei jedoch berücksichtigt wird, dass eine Verzögerung des Kraftfahrzeuges möglich ist, wobei die Fahrgeschwindigkeit in Fahrtrichtung 6 mit der maximal möglichen Verzögerungsrate verzögert wird. Je langsamer die Fahrgeschwindigkeit ist, desto stärker ist der maximale Lenkwinkel. Dies bedeutet, dass in Fahrtrichtung die Krümmung der Trajektorie zunimmt.

Die Trajektorie 11 beschreibt die Bewegung eines zum Objekt 5 weisenden seitlichen Randes 12 des Kraftfahrzeuges 7. Mit diesem Rand 12 muss das Kraftfahrzeug 7 das Objekt 5 passieren. Zur einfachen Nachverarbeitung kann die Trajektorie 11 um eine halbe Breite b des Kraftfahrzeuges 7 nach innen transferiert werden, so dass die sich hieraus ergebende Trajektorie 13 die Bewegung eines Zentrumspunktes des Kraftfahrzeuges 7 beschreibt, die an der Innenseite 8 des Objektes 5 vorbeiführt, ohne dieses zu berühren. Ein Zentrumspunkt des Kraftfahrzeuges 7 ist beispielsweise der Schwerpunkt des Kraftfahrzeuges 7 oder ein Mittelpunkt einer Grundfläche des Kraftfahrzeuges 7. Hierdurch kann die Bewegung des Kraftfahrzeuges im Objektfahrbereich als Bewegung eines punktförmigen Körpers betrachtet werden, sofern die Bewegung im Randbereich des Objektfahrbereiches tangential zu der den Objektfahrbereich begrenzenden Trajektorie 13 ist.

Die Trajektorien 11, 13 können durch Funktionen dargestellt werden, die sehr einfach mathematisch beschrieben werden können. Es können jedoch auch Kurven, deren Krümmung sich im Verlauf ändert einfach beschrieben werden. Dies ist beispielsweise mittels Spline-Funktionen möglich. Hiermit können auch einfach die Abschnitte entlang des Randes des Objektes 5 mit berücksichtigt werden. Durch eine solche Darstellung in Form einer Funktion, die die Grenzlinie 10 des Objektfahrbereiches beschreibt, kann dieser mit wenigen Parametern und damit mit einer geringen Datenmenge dargestellt werden, die sehr schnell von der Sensorvorrichtung 1 an die zentrale Steuereinrichtung 4 übermittelt werden kann.

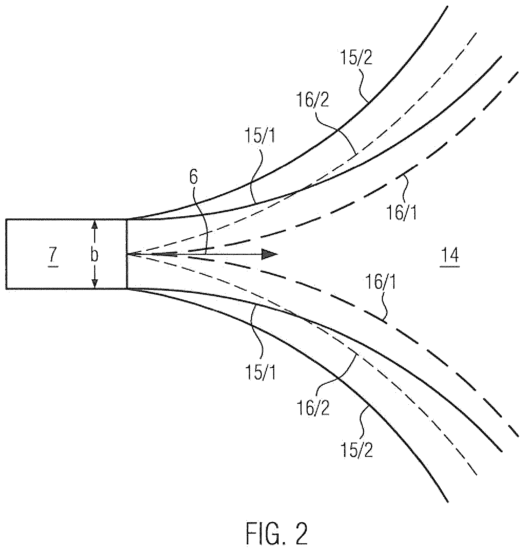

Weiterhin können anhand des aktuellen Ortes des Kraftfahrzeuges und der aktuellen Fahrtrichtung des Kraftfahrzeuges, die mit den Sensorvorrichtungen 1 bezüglich der in Fahrtrichtung 6 vor dem Kraftfahrzeug 7 vorne angeordneten Objekte 5 bestimmt werden. Anhand des aktuellen Ortes und der aktuellen Fahrtrichtung des Kraftfahrzeuges und in Abhängigkeit der Fahrgeschwindigkeit wird ein befahrbarer Bereich von einem nicht befahrbaren Bereich unterschieden, wobei dieser befahrbare Bereich als Fahrzeugfahrbereich 14 bezeichnet wird (Fig. 2). Der Fahrzeugfahrbereich 14 wird durch zwei Grenzlinien bzw. Trajektorien 15 begrenzt, die jeweils eine theoretische Bahn des Kraftfahrzeuges 7 beschreiben, die in Fahrtrichtung 6 vom aktuellen Ort des Kraftfahrzeuges 7 mit einem maximalen Lenkwinkel nach rechts bzw. links verlaufen, wobei der Fahrzeugfahrbereich 14 zwischen den beiden Trajektorien 15 angeordnet ist.

Fig. 2 zeigt das Kraftfahrzeug 7 und die Trajektorien 15/1, die jeweils am linken bzw. rechten seitlichen Rand des Kraftfahrzeuges 7 beginnen und sich von dort nach außen erstrecken, wobei die aktuelle Fahrgeschwindigkeit ohne Berücksichtigung einer möglichen Beschleunigung oder Verzögerung zugrunde gelegt wird, so dass die Trajektorien 15/1 einen konstanten maximalen Lenkwinkel bzw. eine konstante Krümmung aufweisen und somit ein Kreissegment bilden. Ähnlich, wie es oben anhand des Objektfahrbereiches erläutert ist, kann die Trajektorie 15/2 auch unter Berücksichtigung einer Verzögerung des Kraftfahrzeuges 7 ermittelt werden, wobei dann der Lenkwinkel entsprechend der Verzögerung zunimmt und sich die Krümmung entlang der Trajektorie in Fahrtrichtung 6 erhöht.

Weiterhin können die Trajektorien 15/1 und 15/2 um die halbe Breite b/2 des Kraftfahrzeuges 7 nach innen auf die Trajektorien 16/1 und 16/2 abgebildet werden, so dass sie die Bewegung eines Zentrumspunktes des Kraftfahrzeuges 7 beschreiben

Bei der Bestimmung des maximalen Lenkwinkels können weitere Parameter berücksichtigt werden, wie z.B. der aktuelle Untergrund, die Wetterverhältnisse, wobei bei nassem Fahrbahnbelag der maximale Lenkwinkel geringer ist, der Kontur der Fahrstrecke, wobei bei einer ansteigenden Fahrstrecke eine stärkere Verzögerung als bei einer abfallenden Fahrstrecke möglich ist, und andere Parameter, die Einfluss auf den maximal möglichen Lenkwinkel haben.

In der zentralen Steuereinrichtung 4 werden die Objektfahrbereiche 9 der einzelnen Objekte und der Fahrzeugfahrbereich 14 zusammengeführt, was auch als Fusion bezeichnet wird. Fig. 3 zeigt ein Beispiel eines Kraftfahrzeuges 7, das in Fahrtrichtung 6 fährt, wobei mehrere Objekte 5 entlang des Fahrweges angeordnet sind. Hierdurch sind die Objektfahrbereiche 9 und der Fahrzeugfahrbereich 14 jeweils durch eine Grenzlinie 10 begrenzt, deren maximaler Lenkwinkel aufgrund der aktuellen Fahrzeuggeschwindigkeit bestimmt ist, ohne dass eine Beschleunigung oder Verzögerung mit berücksichtigt wird. Der befahrbare Bereich, der sich aus dem Fahrzeugfahrbereich 14 und den mehreren Objektfahrbereichen 9 zusammensetzt, wird durch einige wenige Grenzlinien begrenzt, die jeweils einfach mathemaisch darstellbar sind. Innerhalb dieses Bereiches kann das Fahrerassistenzsystem Trajektorien zum kollisionsfreien Fahren mit dem Kraftfahrzeug 7 legen. Grundsätzlich wäre es möglich an den Schnittpunkten der einzelnen Grenzlinien diese durch eine stetige Funktion mit einer Krümmung, die dem maximalen Lenkwinkel gemäß der aktuellen Fahrgeschwindigkeit entspricht, zu glätten. Dies ist jedoch aus praktischen Gründen nicht notwendig, denn die vom Fahrerassistenzsystem erzeugten Trajektorien sind in ihrer Krümmung auch auf den maximalen Lenkwinkel beschränkt, so dass Ecken von sich schneidenden Grenzlinien 10 nicht vollständig ausgefahren werden können.

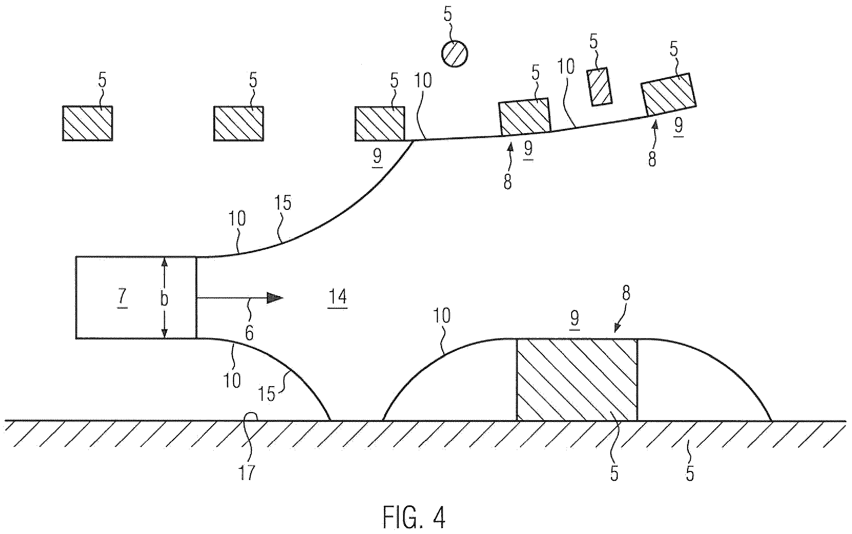

Figur 4 zeigt eine ähnliche Anordnung von Objekten 5 wie Figur 3, wobei hier jedoch die Grenzlinie 10 zwischen benachbarten Objekten 5 auf der linken Seite bezüglich der Fahrtrichtung 6 durch geradlinige Verbindungslinien ausgebildet ist. Diese Grenzlinie 10 lässt sich mit sehr wenig Rechenaufwand zwischen benachbarten statischen Objekten 5 erstellen, Hierbei werden die Innenseiten 8 von Objekten 5 verbunden, deren Abstand kleiner als ein vorbestimmter maximaler Abstand ist. Dieser maximale Abstand beträgt z. B. 5 m bis 100 m. Der maximale Abstand kann auch in Abhängigkeit der aktuellen Fahrgeschwindigkeit variieren und je größer die Fahrgeschwindigkeit ist, desto größer ist auch der maximale Abstand zwischen zwei benachbarten statischen Objekten 5, die mit einer Grenzlinie 10 miteinander verbunden werden. Bei Geschwindigkeiten von z. B. mehr als 100 km/h bzw. 150 km/h kann der maximale Abstand auch wesentlich größer als 100 m sein.

In Figur 4 ist in Fahrtrichtung 6 auf der rechten Seite ein Fahrbahnrand 17 dargestellt, der z. B. die Kante eines Gehsteigs sein kann. Auf der Fahrbahn steht ein statisches Objekt 5, das z. B. ein parkendes Auto ist. Bei derartigen einzelnen Objekten, zu welchen es kein benachbartes Objekt mit einem vorbestimmten Mindestabstand gibt, macht es keinen Sinn, die Innenseite 8 dieses Objektes 5 mit einer geraden Linie mit einer weiteren Innenseite eines anderen statischen Objekts 5 zu verbinden. Hier wird, wie es in Figur 1 und 3 gezeigt ist, die Grenzlinie 10 durch eine sinnvolle Trajektorie bestimmt, sodass sicher eine Kollision mit dem Objekt 5 vermieden werden kann, wenn diese Grenzlinie 10 nicht vom Kraftfahrzeug 7 überfahren wird.

Durch das Verbinden mehrerer Objekte 5 mit einer gemeinsamen Grenzlinie 10 wird die Menge an zu übermittelnden Daten erheblich reduziert, da lediglich Daten einer einzigen Grenzlinie an Stelle von Daten einer Beschreibung mehrerer Objekte zu übertragen sind.

Eine Sensorvorrichtung 1 kann auch mehrere unterschiedliche Sensorelemente 2 umfassen, die jeweils die Objekte 5 mit einem anderen Messprinzip detektieren. Die einzelnen Sensorelemente 2 sehen die unterschiedlichen Objekte 5 mit unterschiedlicher Intensität und es kann auch sein, dass bestimmte Sensorelemente 2 bestimmte Objekte nicht sehen und andere Sensorelemente diese Objekte hingegen sehen. Werden mehrere Objekte mit einer Grenzlinie verbunden, dann können hiermit auch Objekte verbunden werden, die mit unterschiedlichen Sensorelementen 2 der Sensorvorrichtung 1 erfasst werden. Mit einer solchen Grenzlinie können die Vorteile unterschiedlicher Sensorelemente kombiniert werden.

Bei dem in Figur 4 gezeigten Ausführungsbeispiel werden die Innenseiten 8 benachbarter statischer Objekte 5 zur Ausbildung der Grenzlinie 10 mit geradlinigen Linien verbunden. Im Rahmen der Erfindung ist es auch möglich, hierzu gekrümmte Linien zu verwenden. Insbesondere können hierzu Spline-Funktionen verwendet werden, sodass die Grenzlinie 10 eine durchgehend stetige Linie bildet.

Bei einer Änderung der Fahrgeschwindigkeit sind der Objektfahrbereich und der Fahrzeugfahrbereich in Echtzeit anzupassen. Je größer die Fahrgeschwindigkeit ist, desto länger ist auch der Abschnitt in Fahrtrichtung 6 vor dem Kraftfahrzeug 7, für den der Objektfahrbereich zu ermitteln ist. Je geringer die Fahrgeschwindigkeit ist, desto feiner ist die Darstellung der statischen Objekte 5 aufzulösen. Bei einer geringen Fahrgeschwindigkeit kann ein Kraftfahrzeug 7 eine schmale Lücke zwischen zwei benachbarten statischen Objekten 5 passieren, wohingegen dies bei einer hohen Geschwindigkeit nicht möglich ist.

In der zentralen Steuereinrichtung 4 können vorbestimmte Sicherheitsabstände zu den Grenzlinien 10 der Objektfahrbereiche und des Fahrzeugfahrbereichs bei der Erstellung einer Belegungskarte als Sicherheitszonen bzw. Sicherheitsbereiche berücksichtigt werden. Hierdurch können auch in einem vorbestimmten Bereich Beschleunigungen und Verzögerungen des Kraftfahrzeugs erlaubt sein, ohne dass die Belegungskarte geändert werden muss und ohne dass die Gefahr einer Kollision mit einem der Objekte 5 besteht. Diese Sicherheitszonen bzw. Sicherheitsbereiche werden jedoch nicht in der Sensorvorrichtung den Sensordaten hinzugefügt, da die Sensordaten, auch wenn sie zu Objektfahrbereichen 9 vorverarbeitet sind, möglichst exakt die Realität wiedergeben sollen. Hierbei ist insbesondere zu berücksichtigen, dass in einem Kraftfahrzeug mehrere unterschiedliche Fahrerassistenzsysteme zum Einsatz kommen können, die unterschiedliche Sicherheitsreserven bzw. Sicherheitszonen berücksichtigen.

Die oben erläuterten Ausführungsbeispiele zeigen unterschiedliche Ausführungsformen zum Bestimmen der Grenzlinie 10. Es gibt weitere Möglichkeiten, wie die Grenzlinie 10 bestimmt werden kann. Beispielsweise können die Innenseiten von statischen Objekten in Fahrtrichtung ein vorbestimmtes Stück verlängert werden. Hierdurch ergeben sich Abschnitte der Grenzlinie 10. Die Länge dieser Abschnitte wird vorzugsweise in Abhängigkeit der Fahrgeschwindigkeit eingestellt, wobei, je höher die Fahrgeschwindigkeit ist, umso länger sind diese Abschnitte ausgebildet. Die einzelnen Abschnitte müssen keine durchgehende Grenzlinie ergeben. Die Darstellung der Grenzlinie durch mehrere solcher Abschnitte ist v. a. bei hohen Geschwindigkeiten zweckmäßig, bei welchen grundsätzlich keine starken Lenkeinschläge möglich sind. Derartige geradlinige Abschnitte lassen sich mit wenigen Daten von den Sensorvorrichtungen an die zentrale Steuereinrichtung übermitteln.

Weiterhin kann eine automatische Objekterkennung ausgeführt werden, mit welcher z. B. Fahrbahnbegrenzungspfosten und Straßenschilder automatisch erkannt werden, die statische Objekte darstellen. Da Straßenbegrenzungspfosten und Straßenschilder am Fahrbahnrand angeordnet sind, können sie grundsätzlich zur Ausbildung der Grenzlinie 10 miteinander verbunden werden.

Zusammenfassend kann festgestellt werden:
Im Rahmen der Erfindung können mittels einer Sensorvorrichtung erfasste Sensordaten für ein Komfort-Fahrerassistenzsystem verarbeitet werden, wobei Sensordaten, die Objekte beschreiben, derart vorverarbeitet werden, dass zwischen einem befahrbaren und einem nicht befahrbaren Bereich unterschieden wird, wobei der befahrbare Bereich als Objektfahrbereich bezeichnet wird. Der Objektfahrbereich kann durch eine Grenzlinie begrenzt werden. Da die Sensordaten für ein Komfort-Fahrerassistenzsystem aufbereitet werden, müssen sie nicht den gesamten theoretisch befahrbaren Bereich beschreiben, sondern es genügt, wenn die Grenzlinie den üblicherweise sinnvoll befahrbaren Bereich begrenzt. Dies macht es möglich, einerseits sehr einfach eine entsprechende Grenzlinie zu bestimmen ist und andererseits das Datenvolumen, das zur Beschreibung der erfassten Objekte von der Sensorvorrichtung an eine zentrale Steuereinrichtung des Komfort-Fahrerassistenzsystems zu übermitteln ist, erheblich zu reduzieren.

### Bezugszeichenliste:

- 1: Sensorvorrichtung
- 2: Sensorelement
- 3: Prozessorteuerung
- 4: zentrale Steuereinrichtung
- 5: Objekt
- 6: Fahrtrichtung
- 7: Fahrzeug
- 8: Innenseite eines Objektes
- 9: Objektfahrbereich
- 10: Grenzlinie
- 11: Trajektorie
- 12: seitlicher Rand des eigenen Fahrzeuges
- 13: Trajektorie
- 14: Fahrzeugfahrbereich
- 15: Trajektorie
- 16: Trajektorie
- 17: Fahrbahnrand

- b: Breite

## Patentansprüche

1. Verfahren zum Verarbeiten durch eine Sensorvorrichtung (1) von Sensordaten für ein Komfort-Fahrerassistenzsystem für ein Kraftfahrzeug (7), bei dem Sensordaten erfasst werden, die den jeweiligen Ort von Objekten (5) beschreiben,
aus den Sensordaten Koordinaten der Objekte (5) extrahiert werden, wobei eine Innenseite eines Objektes (5) bestimmt wird, an der das Kraftfahrzeug (7) am Objekt (5) vorbei fahren soll,
ein in Fahrtrichtung (6) des Kraftfahrzeugs (7) vor und/oder hinter einem jeden der Objekte (5) liegender befahrbarer Bereich von einem nicht befahrbaren Bereich unterschieden wird, wobei der befahrbare Bereich im Folgenden als Objektfahrbereich (9) bezeichnet wird, wobei die Grenze zwischen dem Objektfahrbereich (9) und dem nicht befahrbaren Bereich eine Grenzlinie (10) ist, die sich entlang der Innenseite des Objektes (5) in Fahrtrichtung (6) über das Objekt nach vorne und/oder nach hinten hinaus erstreckt, und
diese Grenzlinie (10) bestimmt wird und Daten der Grenzlinie (10) an Stelle der das Objekt (5) beschreibenden Sensordaten von der Sensorvorrichtung (1) an eine zentrale Steuereinrichtung (4) des Komfort-Fahrerassistenzsystems weiter geleitet werden.

2. Verfahren nach Anspruch 1,
**dadurch gekennzeichnet,**
**dass** die Grenzlinie (10) durch Verbinden der Innenseite von benachbarten Objekten (5) bestimmt wird.

3. Verfahren nach Anspruch 2,
**dadurch gekennzeichnet**
**dass** die Objekte (5) mittels unterschiedlicher Sensorelemente (2) detektiert werden.

4. Verfahren nach Anspruch 1,
**dadurch gekennzeichnet,**
**dass** die Grenzlinie (10) eine Trajektorie (11, 13) ist, die
- eine Bahn des Kraftfahrzeuges (7) beschreibt, die in Fahrtrichtung (6) vor dem Objekt (5) von außen kommend mit einem maximalen Lenkwinkel mit minimalen Abstand innen am Objekt (5) vorbei führt und/oder
- eine Bahn beschreibt, die nach dem Objekt (5) mit einem für die aktuelle Fahrgeschwindigkeit maximalen Lenkwinkel vom Objekt (5) nach außen führt, wobei der maximale Lenkwinkel in Abhängigkeit der Geschwindigkeit des Kraftfahrzeuges (7) bestimmt wird.

5. Verfahren nach einem der Ansprüche 1 bis 4,
**dadurch gekennzeichnet,**
**dass** die Grenzlinie (10) nur bestimmt wird, wenn das Fahrzeug (7) sich mit einer vorbestimmten Mindestgeschwindigkeit bewegt, die vorzugsweise 10 km/h beträgt.

6. Verfahren nach einem der Ansprüche 1 bis 5,
**dadurch gekennzeichnet,**
**dass** die Innenseite (8) der Objekte (5) als die Seite der Objekte (5) bestimmt wird, an der eine in Fahrtrichtung (6) verlängerte Trajektorie des Kraftfahrzeuges (7) vorbeiführt.

7. Verfahren nach einem der Ansprüche 1 bis 6,
**dadurch gekennzeichnet,**
**dass** eine automatische Objekterkennung ausgeführt wird, wobei ein jedes der erfassten Objekte (5) zumindest jeweils einer Klasse einer vorbestimmten Menge von Klassen von Objekten, wie z.B. Fahrbahnbegrenzungspfosten, Straßenschilder und andere Fahrzeuge, zugeordnet wird.

8. Verfahren nach Anspruch 7,
**dadurch gekennzeichnet,**
**dass** die Objekterkennung mittels einer Bildanalyse ausgeführt wird.

9. Verfahren nach einem der Ansprüche 1 bis 8,
**dadurch gekennzeichnet,**
**dass** bewegte Objekte (5) mittels einer Geschwindigkeitsmessung zur Messung der Relativgeschwindigkeit zwischen dem Kraftfahrzeug (7) und dem Objekt (5) detektiert werden.

10. Verfahren nach Anspruch 9,
**dadurch gekennzeichnet,**
**dass** bewegte Objekte (5) bei der Bestimmung des befahrbaren Bereichs nicht als den befahrbaren Bereich beschränkende Hindernisse berücksichtigt werden.

11. Verfahren nach Anspruch 9 oder 10,
**dadurch gekennzeichnet,**
**dass** bewegte Objekte (5) bei der Bestimmung der Innenseite von statischen Objekten (5) berücksichtigt werden.

12. Verfahren nach einem der Ansprüche 1 bis 11,
**dadurch gekennzeichnet,**
**dass** ein Fahrzeugfahrbereich (14) bestimmt wird, dessen Grenzlinien (10) durch zwei Trajektorien (15, 16) definiert sind, die jeweils eine theoretische Bahn des Kraftfahrzeuges (7) beschreiben, die in Fahrtrichtung (6) vom aktuellen Ort des Kraftfahrzeuges (7) mit einem maximalen Lenkwinkel nach rechts bzw. links verlaufen, wobei der Fahrzeugfahrbereich (14) sich zwischen diesen beiden Trajektorien (15, 16) befindet, wobei Objekte (5) und ein Objektfahrbereich (9) außerhalb dieses Fahrzeugfahrbereichs (14) ignoriert werden.

13. Verfahren nach Anspruch 12,
**dadurch gekennzeichnet,**
**dass** der Fahrzeugfahrbereich (13) in der zentralen Steuereinrichtung (4) berechnet wird und mit den Objektfahrbereichen (9) zu einem Bewegungsbereich kombiniert wird.

14. Verfahren nach einem der Ansprüche 1 bis 13,
**dadurch gekennzeichnet,**
**dass** mehrere Sensorvorrichtungen (1) jeweils Objektfahrbereiche berechnen und diese an die zentrale Steuereinrichtung (4) weiter leiten.

15. Sensorvorrichtung umfassend ein Sensorelement (2) und eine Prozessorsteuerung (3) zum Verarbeiten von Sensordaten für ein Komfort-Fahrerassistenzsystem für ein Kraftfahrzeug (7), bei dem das Sensorelement (2) zum Erfassen von Sensordaten ausgebildet ist, die den Ort von Objekten (5) beschreiben,
und die Prozessorsteuerung (3) ausgebildet ist, um aus den Sensordaten Koordinaten der Objekte (5) zu extrahieren, wobei eine Innenseite eines Objektes (5) definiert wird, an der das Kraftfahrzeug (7) am Objekt (5) vorbei fahren soll,
die Prozessorsteuerung (3) derart ausgebildet ist, dass ein in Fahrtrichtung (6) vor und/oder hinter einem jeden der Objekte (5) liegender befahrbarer Bereich von einem nicht befahrbaren Bereich unterschieden wird, und der befahrbare Bereich im Folgenden als Objektfahrbereich (9) bezeichnet wird, wobei die Grenze zwischen dem Objektfahrbereich (9) und dem nicht befahrbaren Bereich eine Grenzlinie (10) ist, die sich entlang der Innenseite des Objektes (5) in Fahrtrichtung (6) über das Objekt nach vorne und/oder nach hinten hinaus erstreckt, und
diese Grenzlinie (10) bestimmt wird und Daten der Grenzlinie (10) an Stelle der das Objekt (5) beschreibenden Sensordaten bereitgestellt werden zur Weiterleitung von der Sensorvorrichtung (1) an eine zentrale Steuereinrichtung (4) des Komfort-Fahrerassistenzsystems.

16. Sensorvorrichtung nach Anspruch 15,
**dadurch gekennzeichnet,**
**dass** das Sensorelement ein Radar (2/1), ein Lidar (2/2), eine Kamera (2/3), ein Ultraschallsensor oder eine digitale Karte ist.

17. Sensorvorrichtung nach Anspruch 15 oder 16,
**dadurch gekennzeichnet**
**dass** die Sensorvorrichtung zumindest zwei unterschiedliche Sensorelemente (2) aufweist.

18. System zum Verarbeiten von Sensordaten für ein Komfort-Fahrerassistenzsystem für ein Kraftfahrzeug (7), umfassend zumindest eine Sensorvorrichtung (1) nach einem der Ansprüche 15 bis 17 und eine zentrale Steuereinrichtung (4), die mit der Sensorvorrichtung (1) verbunden ist, wobei die zentrale Steuereinrichtung (4) zur Erstellung einer Belegungskarte ausgebildet ist.

19. System nach Anspruch 18,
**dadurch gekennzeichnet,**
**dass** die Prozessorsteuerung (3) zum Ausführen eines Verfahrens nach einem der Ansprüche 2 bis 14 ausgebildet ist.

## Claims

1. Method for processing sensor data for a comfort driver assistance system for a motor vehicle (7) by means of a sensor apparatus (1), in which sensor data describing the respective location of objects (5) are acquired,
coordinates of the objects (5) are extracted from the sensor data, an inner side of an object (5), on which the motor vehicle (7) is intended to drive past the object (5), being determined,
a region which can be travelled on and is in front of and/or behind each of the objects (5) in the direction of travel (6) of the motor vehicle (7) is distinguished from a region which cannot be travelled on, the region which can be travelled on being referred to as the object travel region (9) below, the boundary between the object travel region (9) and the region which cannot be travelled on being a boundary line (10) which extends beyond the object to the front and/or to the rear along the inner side of the object (5) in the direction of travel (6), and
this boundary line (10) is determined and data relating to the boundary line (10) are forwarded from the sensor apparatus (1) to a central control device (4) of the comfort driver assistance system instead of the sensor data describing the object (5) .

2. Method according to Claim 1,
**characterized**
**in that** the boundary line (10) is determined by connecting the inner side of adjacent objects (5).

3. Method according to Claim 2,
**characterized**
**in that** the objects (5) are detected by means of different sensor elements (2).

4. Method according to Claim 1,
**characterized**
**in that** the boundary line (10) is a trajectory (11, 13) which
- describes a path of the motor vehicle (7) which, coming from the outside in front of the object (5) in the direction of travel (6), leads past the inside of the object (5) at a minimum distance with a maximum steering angle, and/or
- describes a path which leads outwards from the object (5) with a maximum steering angle for the current driving speed after the object (5), the maximum steering angle being determined on the basis of the speed of the motor vehicle (7).

5. Method according to one of Claims 1 to 4,
**characterized**
**in that** the boundary line (10) is determined only if the vehicle (7) is moving at a predetermined minimum speed which is preferably 10 km/h.

6. Method according to one of Claims 1 to 5,
**characterized**
**in that** the inner side (8) of the objects (5) is determined as that side of the objects (5) which is passed by a trajectory of the motor vehicle (7) which is extended in the direction of travel (6).

7. Method according to one of Claims 1 to 6,
**characterized**
**in that** automatic object recognition is carried out, each of the detected objects (5) respectively being assigned to at least one class of a predetermined set of classes of objects, for example road boundary posts, road signs and other vehicles.

8. Method according to Claim 7,
**characterized**
**in that** the object recognition is carried out by means of an image analysis.

9. Method according to one of Claims 1 to 8,
**characterized**
**in that** moving objects (5) are detected by means of a speed measurement for measuring the relative speed between the motor vehicle (7) and the object (5) .

10. Method according to Claim 9,
**characterized**
**in that** moving objects (5) are not taken into account as obstacles which restrict the region which can be travelled on when determining the region which can be travelled on.

11. Method according to Claim 9 or 10,
**characterized**
**in that** moving objects (5) are taken into account when determining the inner side of static objects (5) .

12. Method according to one of Claims 1 to 11,
**characterized**
**in that** a vehicle travel region (14) is determined, the boundary lines (10) of which are defined by two trajectories (15, 16) each describing a theoretical path of the motor vehicle (7) running to the right or left in the direction of travel (6) from the current location of the motor vehicle (7) with a maximum steering angle, the vehicle travel region (14) being between these two trajectories (15, 16), objects (5) and an object travel region (9) outside this vehicle travel region (14) being ignored.

13. Method according to Claim 12,
**characterized**
**in that** the vehicle travel region (13) is calculated in the central control device (4) and is combined with the object travel regions (9) to form a movement region.

14. Method according to one of Claims 1 to 13,
**characterized**
**in that** a plurality of sensor apparatuses (1) each calculate object travel regions and forward them to the central control device (4).

15. Sensor apparatus comprising a sensor element (2) and a processor controller (3) for processing sensor data for a comfort driver assistance system for a motor vehicle (7), in which the sensor element (2) is designed to acquire sensor data describing the location of objects (5),
and the processor controller (3) is designed to extract coordinates of the objects (5) from the sensor data, an inner side of an object (5), on which the motor vehicle (7) is intended to drive past the object (5), being defined,
the processor controller (3) is designed in such a manner that a region which can be travelled on and is in front of and/or behind each of the objects (5) in the direction of travel (6) is distinguished from a region which cannot be travelled on, and the region which can be travelled on is referred to as the object travel region (9) below, the boundary between the object travel region (9) and the region which cannot be travelled on being a boundary line (10) which extends beyond the object to the front and/or to the rear along the inner side of the object (5) in the direction of travel (6), and this boundary line (10) is determined and data relating to the boundary line (10) are provided, instead of the sensor data describing the object (5), for forwarding from the sensor apparatus (1) to a central control device (4) of the comfort driver assistance system.

16. Sensor apparatus according to Claim 15,
**characterized**
**in that** the sensor element is a radar (2/1), a lidar (2/2), a camera (2/3), an ultrasonic sensor or a digital map.

17. Sensor apparatus according to Claim 15 or 16,
**characterized**
**in that** the sensor apparatus has at least two different sensor elements (2).

18. System for processing sensor data for a comfort driver assistance system for a motor vehicle (7), comprising at least one sensor apparatus (1) according to one of Claims 15 to 17 and a central control device (4) which is connected to the sensor apparatus (1), the central control device (4) being designed to create an occupancy grid.

19. System according to Claim 18,
**characterized**
**in that** the processor controller (3) is designed to carry out a method according to one of Claims 2 to 14.

## Revendications

1. Procédé permettant de traiter par un dispositif capteur (1) des données de capteur pour un système d'assistance au conducteur de confort pour un véhicule automobile (7), dans lequel
des données de capteur sont détectées qui décrivent l'emplacement respectif d'objets (5),
les coordonnées des objets (5) sont extraites des données de capteur, un côté intérieur d'un objet (5) étant déterminé au niveau duquel le véhicule automobile (7) doit passer devant l'objet (5),
une zone carrossable, située devant et/ou derrière chacun des objets (5) dans le sens de la marche (6) du véhicule automobile (7), est distinguée par rapport à une zone non carrossable, la zone carrossable étant par la suite appelée zone de circulation des objets (9), la limite entre la zone de circulation des objets (9) et la zone non carrossable étant une ligne de démarcation (10) qui s'étend le long du côté intérieur de l'objet (5) dans le sens de la marche (6) au-delà de l'objet vers l'avant et/ou vers l'arrière, et
cette ligne de démarcation (10) est déterminée, et au lieu des données de capteur décrivant l'objet (5), des données de la ligne de démarcation (10) sont retransmises par le dispositif capteur (1) à un dispositif de commande central (4) du système d'assistance au conducteur de confort.

2. Procédé selon la revendication 1, **caractérisé en ce que** la ligne de démarcation (10) est déterminée en reliant le côté intérieur d'objets voisins (5).

3. Procédé selon la revendication 2, **caractérisé en ce que** les objets (5) sont détectés au moyen de différents éléments capteurs (2).

4. Procédé selon la revendication 1, **caractérisé en ce que** la ligne de démarcation (10) est une trajectoire (11, 13) qui
- décrit un parcours du véhicule automobile (7) qui, en venant de l'extérieur dans le sens de la marche (6) avant l'objet (5), passe avec un angle de braquage maximal et une distance minimale à l'intérieur devant l'objet (5), et/ou
- décrit un parcours qui, après l'objet (5), s'éloigne de l'objet (5) vers l'extérieur avec un angle de braquage maximal pour la vitesse de circulation actuelle, l'angle de braquage maximal étant déterminé en fonction de la vitesse du véhicule automobile (7).

5. Procédé selon l'une quelconque des revendications 1 à 4, **caractérisé en ce que** la ligne de démarcation (10) n'est déterminée que si le véhicule (7) se déplace à une vitesse minimale prédéterminée de préférence égale à 10 km/h.

6. Procédé selon l'une quelconque des revendications 1 à 5, **caractérisé en ce que** le côté intérieur (8) des objets (5) est déterminé comme le côté des objets (5) devant lequel passe une trajectoire du véhicule automobile (7), prolongée dans le sens de la marche (6) .

7. Procédé selon l'une quelconque des revendications 1 à 6, **caractérisé en ce qu'**une reconnaissance d'objet automatique est effectuée, chacun des objets détectés (5) étant associé au moins respectivement à une classe d'un ensemble prédéterminé de classes d'objets, comme par exemple des délinéateurs, des panneaux de signalisation et d'autres véhicules.

8. Procédé selon la revendication 7, **caractérisé en ce que** la reconnaissance d'objet est effectuée au moyen d'une analyse d'image.

9. Procédé selon l'une quelconque des revendications 1 à 8, **caractérisé en ce que** des objets en mouvement (5) sont détectés au moyen d'une mesure de vitesse destinée à mesurer la vitesse relative entre le véhicule automobile (7) et l'objet (5).

10. Procédé selon la revendication 9, **caractérisé en ce que** lors de la détermination de la zone carrossable, des objets en mouvement (5) ne sont pas pris en compte comme des obstacles restreignant la zone carrossable.

11. Procédé selon la revendication 9 ou 10, **caractérisé en ce que** des objets en mouvement (5) sont pris en compte lors de la détermination du côté intérieur d'objets statiques (5).

12. Procédé selon l'une quelconque des revendications 1 à 11, **caractérisé en ce qu'**une zone de circulation de véhicule (14) est déterminée dont les lignes de démarcation (10) sont définies par deux trajectoires (15, 16) qui décrivent respectivement un parcours théorique du véhicule automobile (7) s'étendant dans le sens de la marche (6) de l'emplacement actuel du véhicule automobile (7) avec un angle de braquage maximal vers la droite ou vers la gauche, la zone de circulation de véhicule (14) se trouvant entre ces deux trajectoires (15, 16), les objets (5) et une zone de circulation des objets (9) en dehors de cette zone de circulation de véhicule (14) étant ignorés.

13. Procédé selon la revendication 12, **caractérisé en ce que** la zone de circulation de véhicule (13) est calculée dans le dispositif de commande central (4) et est combinée avec les zones de circulation d'objets (9) pour former une zone de déplacement.

14. Procédé selon l'une quelconque des revendications 1 à 13, **caractérisé en ce que** plusieurs dispositifs capteurs (1) calculent respectivement des zones de circulation des objets et les retransmettent au dispositif de commande central (4).

15. Dispositif capteur, comprenant un élément capteur (2) et une commande de processeur (3) permettant de traiter des données de capteur destinées à un système d'assistance au conducteur de confort pour un véhicule automobile (7), dans lequel
l'élément capteur (2) est réalisé pour détecter des données de capteur qui décrivent l'emplacement d'objets (5),
et la commande de processeur (3) est réalisée pour extraire des coordonnées des objets (5) à partir des données de capteur, un côté intérieur d'un objet (5) étant défini au niveau duquel le véhicule automobile (7) doit passer devant l'objet (5),
la commande de processeur (3) est réalisée de telle sorte qu'une zone carrossable située dans le sens de la marche (6) devant et/ou derrière chacun des objets (5) est distinguée par rapport à une zone non carrossable, et la zone carrossable est par la suite appelée zone de circulation des objets (9), la limite entre la zone de circulation des objets (9) et la zone non carrossable étant une ligne de démarcation (10) qui s'étend le long du côté intérieur de l'objet (5) dans le sens de la marche (6) au-delà de l'objet vers l'avant et/ou vers l'arrière, et
cette ligne de démarcation (10) est déterminée, et au lieu des données de capteur décrivant l'objet (5), des données de la ligne de démarcation (10) sont fournies pour être retransmises par le dispositif capteur (1) à un dispositif de commande central (4) du système d'assistance au conducteur de confort.

16. Dispositif capteur selon la revendication 15, **caractérisé en ce que** l'élément capteur est un radar (2/1), un lidar (2/2), une caméra (2/3), un capteur à ultrasons ou une carte numérique.

17. Dispositif capteur selon la revendication 15 ou 16, **caractérisé en ce que** le dispositif capteur présente au moins deux éléments capteurs différents (2) .

18. Système permettant de traiter des données de capteur pour un système d'assistance au conducteur de confort pour un véhicule automobile (7), comprenant au moins un dispositif capteur (1) selon l'une quelconque des revendications 15 à 17 et un dispositif de commande central (4) qui est relié au dispositif capteur (1), le dispositif de commande central (4) étant réalisé pour créer une carte d'occupation.

19. Système selon la revendication 18, **caractérisé en ce que** la commande de processeur (3) est réalisée pour effectuer un procédé selon l'une quelconque des revendications 2 à 14.
